# FASCICULE DE BREVET EUROPEEN

(11) **EP 3 882 422 B1**
(45) Date de publication et mention de la délivrance du brevet: **21.09.2022**
(21) Numéro de dépôt: 21162761.7
(22) Date de dépôt: 16.03.2021
(51) Int. Cl.: E05C 3/04

(54) **VERROU POUR PANNEAU D'AÉRONEF**
SCHLOSS FÜR EIN LUFTFAHRZEUG-PANEEL
LOCK FOR PANEL OF AN AIRCRAFT

(30) Priorité: 17.03.2020 FR 2002593
(43) Date de publication de la demande: 22.09.2021
(73) Titulaire: LISI Aerospace, 75012 Paris (FR)
(72) Inventeur: ANTOINE, Jimmy, 18230 Saint-Doulchard (FR); DEFRANCE, Vincent, 18120 Preuilly (FR)
(74) Mandataire: Lavoix

(56) Documents cités:
- FR-A- 1 070 235
- FR-A1- 2 605 671
- US-A- 2 717 796
- US-A- 2 722 445

## Description

La présente invention concerne un verrou destiné à assembler de manière amovible un panneau à une structure, notamment d'aéronef, du type comportant : une console apte à être fixée au panneau ; une gâche articulée à la console en rotation autour d'un premier axe ; un poussoir articulé à la console en rotation autour d'un deuxième axe parallèle au premier axe ; un ressort, comprenant un premier et un deuxième bras reliés par au moins une portion intermédiaire, une extrémité de chacun desdits premier et deuxième bras étant en appui respectivement sur la gâche et sur le poussoir. Le verrou est mobile entre une configuration fermée, dans laquelle la gâche est au contact du poussoir, et une configuration ouverte, dans laquelle la gâche est à distance du poussoir. Une première contrainte du ressort de torsion dans la position fermée est supérieure à une deuxième contrainte dudit ressort de torsion dans la position ouverte.

Un tel verrou est notamment connu des documents FR2556399 et FR2605671 En outre, le document US2717796 divulgue un verrou avec les caractéristiques de la préambule de la revendication 1.

Le ressort de ce type de verrou est généralement soumis à d'importantes contraintes mécaniques, en raison d'un fort débattement des bras du ressort entre les configurations fermée et ouverte. Ces contraintes diminuent la durée de vie du verrou.

La présente invention a pour but de proposer un verrou amélioré, associé à une plus longue durée de vie du ressort.

A cet effet, l'invention a pour objet un verrou du type précité, dans lequel : l'au moins une portion intermédiaire du ressort de torsion est disposée autour du deuxième axe ; le verrou comprend en outre au moins une surface de déplacement, reliée à l'extrémité d'au moins un premier bras ; et la gâche comporte un profil de déplacement en contact avec la surface de déplacement dans les configurations fermée et ouverte du verrou, ladite au moins une surface de déplacement étant apte à se déplacer sur ledit profil de déplacement lors d'un déplacement dudit verrou entre lesdites configurations fermée et ouverte.

Suivant d'autres aspects avantageux de l'invention, le verrou comporte l'une ou plusieurs des caractéristiques suivantes, prises isolément ou suivant toutes les combinaisons techniquement possibles :
- la surface de déplacement comporte un rouleau articulé à l'extrémité du premier bras, selon un troisième axe parallèle au deuxième axe ;
- le profil de déplacement comporte une première et une seconde extrémités, ladite seconde extrémité étant au contact de la surface de déplacement dans la configuration ouverte, une distance entre le premier axe et la seconde extrémité étant inférieure à une distance entre le premier axe et la première extrémité ;
- le profil de déplacement comporte en outre une zone intermédiaire proche de la première extrémité, une distance entre le premier axe et la seconde extrémité étant inférieure à une distance entre le premier axe et la zone intermédiaire ;
- une distance entre les deuxième et troisième axes est inférieure à une distance entre les premier et deuxième axes ;
- les premier et deuxième bras du ressort forment un premier angle en configuration fermée et un deuxième angle en configuration ouverte, une différence entre les premier et deuxième angles étant inférieure à 60°, préférentiellement inférieure à 30° et plus préférentiellement inférieure à 20° ;
- le premier bras du ressort comporte deux branches sensiblement parallèles, le rouleau étant disposé entre lesdites deux branches ;
- la gâche comprend deux parois traversées par le premier axe ;
- le profil de déplacement de la gâche est formé par une pièce disposée entre les deux parois et fixée auxdites deux parois,
- le ressort est un ressort de torsion, et la portion intermédiaire est une portion hélicoïdale.

L'invention se rapporte en outre à un aéronef comprenant : une structure ; un panneau mobile par rapport à ladite structure ; et un verrou tel que décrit ci-dessus, ledit verrou étant fixé au panneau de sorte qu'en configuration fermée du verrou, ledit verrou bloque une ouverture du panneau par rapport à la structure.

L'invention sera mieux comprise à la lecture de la description qui va suivre, donnée uniquement à titre d'exemple non limitatif et faite en se référant aux dessins sur lesquels :
[Fig 1] la figure 1 est une vue de détail, en coupe, d'un aéronef comprenant un verrou selon un premier mode de réalisation de l'invention, dans une première configuration ;
[Fig 2] la figure 2 est une vue en coupe du verrou de la figure 1, dans une deuxième configuration ;
[Fig 3] la figure 3 est une vue en bout du verrou des figures 1 et 2 dans la deuxième configuration ; et
[Fig 4] la figure 4 est une vue en perspective de la gâche d'un verrou selon un deuxième mode de réalisation de l'invention.

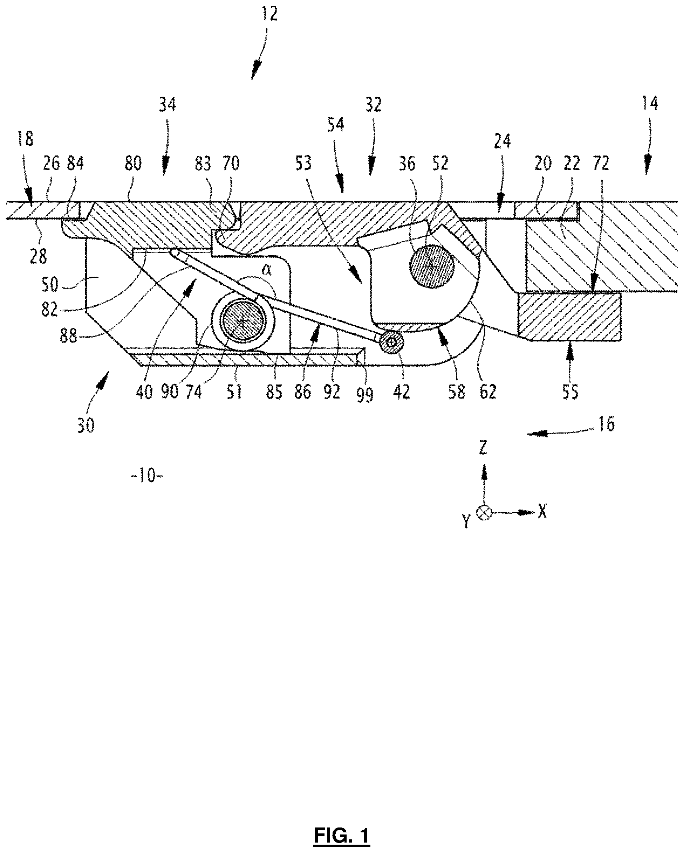

La figure 1 représente un aéronef 10 comprenant un verrou 12 selon un mode de réalisation de l'invention. Plus précisément, l'aéronef 10 comporte en outre : une structure 14, dans laquelle est aménagé un compartiment 16 ; et un panneau 18, articulé sur la structure 14 et apte à ouvrir et à fermer le compartiment 16. Dans une configuration fermée dudit compartiment 16, visible sur la figure 1, un bord 20 du panneau 18 est au contact d'un bord 22 de la structure 14.

A proximité du bord 20, le panneau 18 comporte un orifice traversant 24, présentant de préférence un contour fermé.

Comme précisé ci-après, le verrou 12 est assemblé au panneau 18. Dans la suite de la description, on considère une base orthonormée (X, Y, Z) associée au panneau 18 et au verrou 12, la direction Z représentant la verticale.

On considère ici que le panneau 18 comporte une face supérieure 26 et une face inférieure 28, chacune desdites faces s'étendant sensiblement dans un plan (X, Y). Dans la configuration fermée de la figure 1, la face inférieure 28 est orientée vers le compartiment 16.

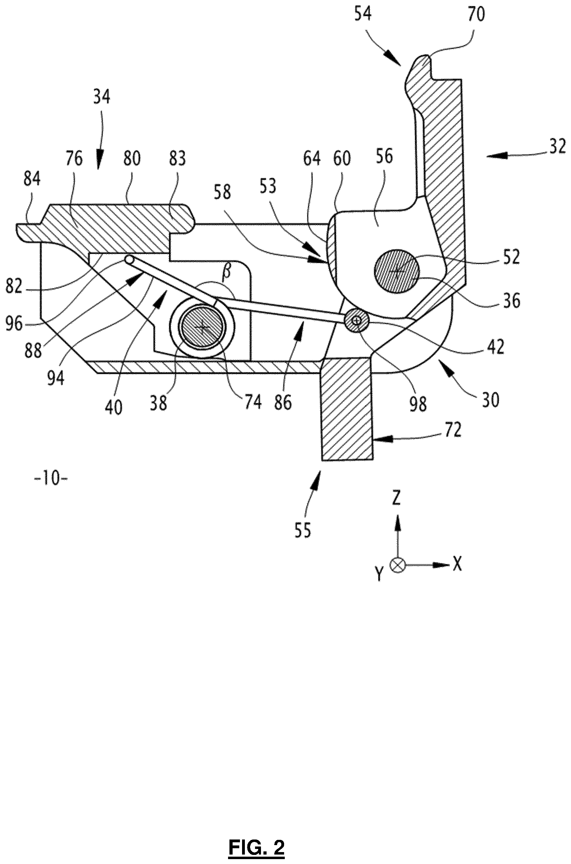

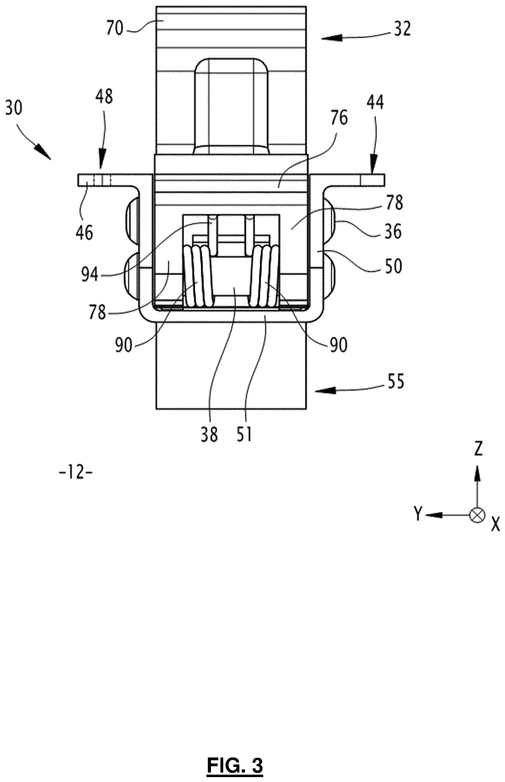

Le verrou 12, également visible sur les figures 2 et 3, comporte : une console 30 ; une gâche 32 ; un poussoir 34 ; un premier rivet 36 ; un deuxième rivet 38 ; un ressort 40 ; et une surface de déplacement. Dans le mode de réalisation représenté, la surface de déplacement est un rouleau 42.

La console 30 comporte une surface 44 de fixation au panneau 18, ladite surface 44 s'étendant sensiblement dans un plan (X, Y). Plus précisément, comme visible sur la figure 3, la console 30 présente une forme sensiblement en oméga, comprenant deux pattes 46 supérieures qui forment la surface 44 de fixation. Les pattes 46 présentent des trous 48 de fixation au panneau 18.

La console 30 comporte en outre deux flancs 50, chacun desdits flancs s'étendant sensiblement dans un plan (X, Z). Chaque patte 46 forme une extrémité supérieure d'un flanc 50. La console 30 comporte en outre un fond 51, sensiblement disposé dans un plan (X, Y) et reliant les extrémités inférieures des deux flancs 50.

La gâche 32 peut pivoter par rapport à la console 30 autour d'un premier axe 52 de rotation, parallèle à la direction Y. Plus précisément, la gâche 32 est disposée entre les deux flancs 50 de la console. Le premier axe 52 est matérialisé par le premier rivet 36, qui relie lesdits deux flancs 50.

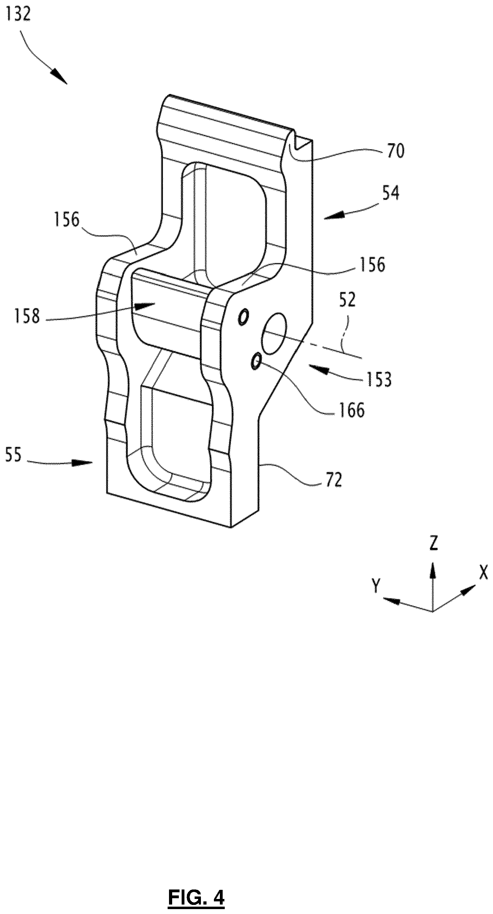

La figure 4 représente une gâche 132 selon une variante de réalisation de l'invention. La gâche 132 est apte à remplacer la gâche 32 dans le verrou 12. La gâche 32 et la gâche 132 seront décrites simultanément ci-après, les éléments communs étant désignés par les mêmes numéros de référence.

La gâche 32, 132 comporte : un corps rotatif 53, 153, une première extension 54 et une deuxième extension 55.

Le corps rotatif 53, 153 est traversé par le premier rivet 36, qui matérialise le premier axe 52 de rotation. Dans les modes de réalisation représentés, le corps rotatif 53, 153 comporte deux parois 56, 156, disposées à chaque extrémité du premier rivet 36, un espace étant ménagé entre lesdites deux parois.

Le corps rotatif 53, 153 comporte un profil de déplacement, en particulier un profil incurvé 58, 158 convexe. Le profil incurvé 58, 158 a sensiblement une section en arc de cercle comprenant un ou plusieurs rayons, dont une concavité est orientée vers le premier axe 52. En variante non représentée, le profil de déplacement peut comprendre un plan incliné.

Le profil incurvé 58, 158 s'étend entre une première 60 et une seconde 62 extrémités, la seconde extrémité 62 étant plus proche du premier axe 52 que la première extrémité 60.

Le profil incurvé 58, 158 comprend en outre une zone intermédiaire 64, proche de la première extrémité. La seconde extrémité 62 est plus proche du premier axe 52 que la zone intermédiaire 64. De préférence, la zone intermédiaire 64 est plus proche du premier axe 52 que la première extrémité 60.

De préférence, le profil incurvé 58, 158 convexe ne comporte aucune concavité.

Dans le mode de réalisation des figures 1 à 3, le profil incurvé 58 de la gâche 32 est formé d'une pièce avec les parois 56 du corps rotatif 53. Par exemple, le profil incurvé 58 inclut un bord desdites parois.

Dans le mode de réalisation de la figure 4, le profil incurvé 158 de la gâche 132 est formé par une pièce rapportée, disposée entre les parois 156 du corps rotatif 153 et fixée audites parois. La fixation est par exemple réalisée au moyen de rivets 166.

Chacune des première 54 et deuxième 55 extensions de la gâche 32, 132 s'étend à partir du corps rotatif 53, 153, selon une direction sensiblement perpendiculaire au premier axe 52. Les première 54 et deuxième 55 extensions sont situées de part et d'autre d'un plan passant par le premier axe 52.

La première extension 54 de la gâche 32, 132 comporte une première languette 70, formant une extrémité libre de ladite première extension.

La deuxième extension 55 de la gâche 32, 132 comporte une surface de contact 72. Dans les modes de réalisation représentés, ladite surface de contact 72 est plane.

Le poussoir 34 peut pivoter par rapport à la console 30 autour d'un deuxième axe 74 de rotation, parallèle à la direction Y. Plus précisément, le poussoir 34 est disposé entre les deux flancs 50 de la console. Le deuxième axe 74 est matérialisé par le deuxième rivet 38 qui relie lesdits deux flancs 50.

Le poussoir 34 présente une forme générale en U, comprenant un élément central 76 et deux éléments latéraux 78 reliés par ledit élément central.

L'élément central 76 comporte une surface de poussée 80 et une surface d'appui 82, orientées à l'opposé l'une de l'autre selon la direction Z. L'élément central 76 comporte en outre une deuxième languette 83, s'étendant en saillie de l'élément central 76 dans le plan (X,Y). Chaque extrémité latérale de l'élément central est reliée à un élément latéral 78.

Les éléments latéraux 78 sont écartés l'un de l'autre selon la direction Y, chacun desdits éléments latéraux 78 étant traversé par le deuxième rivet 38.

Le poussoir comporte au moins une butée 84, 85, formée par une surface parallèle au plan (X, Y). Dans le mode de réalisation représenté, l'élément central 76 comporte une première butée 84 ; et à l'opposé dudit élément central, chacun des éléments latéraux comporte une deuxième butée 85. La surface de la première butée 84 et les surfaces des deuxièmes butées 85 sont orientées dans des sens opposés selon la direction Z.

Le ressort 40 est un ressort de torsion, par exemple formé d'un fil métallique. Le ressort de torsion 40 comprend un premier 86 et un deuxième 88 bras reliés par au moins une portion intermédiaire, dans ce cas une portion hélicoïdale 90. L'au moins une portion hélicoïdale est disposée autour du deuxième rivet 38, entre les éléments latéraux 78 du poussoir. La portion hélicoïdale comporte au moins une spire et préférentiellement plusieurs spires.

Dans le mode de réalisation représenté, chacun des premier 86 et deuxième 88 bras comporte deux branches 92, 94 sensiblement parallèles dans le plan (X, Z). Par ailleurs, le ressort 40 comporte deux portions hélicoïdales 90, chacune desdites portions étant disposée selon la direction Y entre une branche 92 du premier bras et une branche 94 du deuxième bras.

Les extrémités des branches 94 du deuxième bras 88 sont jointes l'une à l'autre et forment une extrémité 96 du deuxième bras.

Le rouleau 42 est articulé aux extrémités ou proche des extrémités vers l'intérieur des branches 92 du premier bras 86, lesdites extrémités matérialisant un troisième axe 98 de rotation, parallèle à la direction Y. Une distance entre les deuxième 74 et troisième 98 axes est inférieure à une distance entre les deuxième 74 et premier 52 axes. Ainsi, l'axe 98 du rouleau est déporté dans la direction X par rapport au premier axe 52 de la gâche.

Dans le mode de réalisation représenté sur la figure 1, le verrou 12 est assemblé au panneau 18. Plus précisément, la surface de fixation 44 de la console 30 est fixée à la face inférieure 28 du panneau, de sorte que la gâche 32 et la surface de poussée 80 du poussoir 34 soient en regard de l'orifice 24 dudit panneau.

La figure 1 montre le verrou 12 dans une première configuration, dite fermée, correspondant à la configuration fermée du compartiment 16.

En configuration fermée du verrou 12, l'extrémité 96 du deuxième bras 88 du ressort 40 est en appui contre la surface d'appui 82 du poussoir 34 ; et le rouleau 42 est en appui contre la zone intermédiaire 64 du profil incurvé 58 de la gâche 32. Les premier 86 et deuxième 88 bras du ressort forment entre eux un premier angle a.

Dans ladite configuration fermée, un effort exercé par le ressort 40 sur le poussoir 34 tend à soulever la surface d'appui 82. En outre, le rouleau 42 exerce sur le profil incurvé 58 de la gâche 32 un effort normal à la surface dudit rouleau. Ledit effort tend à faire pivoter la gâche 32 en soulevant la première extension 54 de ladite gâche, comportant la première languette 70.

Dans la configuration fermée du compartiment 16, les première 84 et deuxièmes 85 butées du poussoir 34 sont respectivement au contact de la face inférieure 28 du panneau 18 et au contact du fond 51 de la console. En outre, une surface supérieure de la première languette 70 de la gâche 32 est au contact d'une surface inférieure de la deuxième languette 83 du poussoir 34.

Lesdits contacts bloquent en rotation le poussoir 34 et la gâche 32. Une première contrainte en torsion est ainsi appliquée sur les bras 86, 88 du ressort 40.

En outre, dans la configuration fermée du compartiment 16, la surface de contact 72 de la gâche 32 est au contact du bord 22 de la structure 14 de l'aéronef 10, de sorte à empêcher un soulèvement du bord 20 du panneau 18 par rapport à ladite structure. Ledit panneau 18 est ainsi verrouillé en configuration fermée.

De préférence, le verrou 12 et le panneau 18 sont configurés de sorte qu'en configuration fermée du compartiment 16, la gâche 32 et la surface de poussée 80 du poussoir 34 affleurent la face supérieure 26 du panneau.

Les figures 2 et 3 montrent le verrou 12 dans une deuxième configuration, dite ouverte. La configuration ouverte du verrou 12 correspond à une situation de déverrouillage de l'ouverture du panneau 18. Ledit panneau et la structure 14 ne sont pas représentés sur les figures 2 et 3.

En configuration ouverte du verrou 12, la gâche 32 se trouve dans une position angulaire différente de la configuration fermée, par rapport à la console 30. Plus précisément, en configuration ouverte du verrou, les première 54 et deuxième 55 extensions de la gâche ont pivoté autour du premier axe 52 et la gâche 32 s'étend dans un plan médian sensiblement perpendiculaire au fond 51 de la console. La première languette 70 de la gâche 32 est à l'écart de la deuxième languette 83 du poussoir 34 ; et la surface de contact 72 de la gâche est à l'écart de la structure 14 de l'aéronef 10. La surface de contact 72 vient en butée sur un bord 99 du fond 51, ce qui limite la rotation de la gâche autour du premier axe 52.

En configuration ouverte du verrou 12, l'extrémité 96 du deuxième bras 88 du ressort 40 est toujours en appui contre la surface d'appui 82 du poussoir 34 ; et le rouleau 42 est en appui contre la seconde extrémité 55 du profil incurvé 53 de la gâche 32. Une deuxième contrainte en torsion est ainsi appliquée sur les bras 86, 88 du ressort 40. Ladite deuxième contrainte est inférieure à la première contrainte correspondant à la configuration fermée du verrou 12.

Les premier 86 et deuxième 88 bras du ressort forment entre eux un deuxième angle β. Dans le mode de réalisation représenté, le deuxième angle β est inférieur au premier angle α correspondant à la configuration fermée du verrou 12.

En valeur absolue, une différence entre le premier angle α et le deuxième angle β est préférentiellement inférieure à 60°, plus préférentiellement inférieure à 30°, encore plus préférentiellement inférieure à 20°.

Un procédé de fonctionnement du verrou 12 de l'aéronef 10 va maintenant être décrit.

On considère un état initial dans lequel le compartiment 16 et le verrou 12 sont en configuration fermée.

Afin de déverrouiller le panneau 18 en vue de l'ouverture du compartiment 16, un opérateur appuie sur la surface de poussée 80 du poussoir 34. L'élément central 76 dudit poussoir est déplacé vers le bas, ce qui correspond sur la figure 1 à une rotation antihoraire du poussoir 34 autour du deuxième axe 74. Durant ladite rotation du poussoir, la contrainte appliquée au ressort de torsion 40 augmente. De même, l'effort imprimé par le rouleau 42 sur le profil de déplacement de la gâche 32 augmente. Le rouleau 42 se déplace de la zone intermédiaire 64 jusqu'à la première extrémité 60 du profil incurvé 58.

La rotation antihoraire du poussoir 34 est poursuivie jusqu'à ce que la deuxième languette 83 dudit poussoir se désengage de la première languette 70 de la gâche 32. Ladite gâche, ainsi libérée, pivote sous l'effet de l'effort exercé par le rouleau 42 du fait du déport de l'axe du rouleau et du premier axe 52. Ledit pivotement correspond sur la figure 1 à une rotation horaire de la gâche 32 autour du premier axe 52. La surface de contact 72 de la gâche 32 s'écarte ainsi du bord 22 de la structure 14 de l'aéronef 10.

Durant la rotation de la gâche 32, le rouleau 42 se déplace de la première 60 vers la seconde 62 extrémité du profil incurvé 58. La contrainte appliquée au ressort 40 diminue progressivement.

En parallèle, une fois relâchée la pression exercée par l'opérateur sur la surface de poussée 80, le poussoir 34 retrouve une position analogue à la configuration fermée, avec notamment les deuxièmes butées 85 au contact du fond 51 de la console 30.

Le rouleau 42 reposant sur la seconde extrémité 62 du profil incurvé 58, la configuration ouverte du verrou 12 est obtenue. La surface de contact 72 de la gâche étant à l'écart de la structure 14 de l'aéronef 10, l'ouverture du panneau 18 est rendue possible.

Les différents rayons des différentes zones 60, 62, 64 du profil incurvé 58 permettent d'améliorer le guidage du rouleau 42 en appui sur le profil de déplacement de la gâche.

L'absence de concavité entre la première 60 et la seconde 62 extrémités permet d'assurer que la surface de déplacement, ici le rouleau 42, ne sera pas bloqué(e) dans une concavité lors d'une pression sur le poussoir 34 ou lors du basculement de la gâche 32 autour du premier axe 52.

Afin de verrouiller à nouveau le panneau 18 en configuration fermée, l'opérateur appuie sur la gâche 32 pour faire pivoter la première languette 70 vers la deuxième languette 83, de sorte à réenclencher lesdites languettes en rétablissant la configuration fermée du verrou 12. La surface de contact 72 de la gâche 32 est ainsi remise au contact de la structure 14 de l'aéronef 10.

Un tel mécanisme de verrouillage permet de prévoir un débattement relativement faible entre les configurations ouvertes et fermées, représenté par la différence entre les angles α et β. Ce faible débattement diminue l'usure du ressort 40 au cours du temps, ce qui améliore la durée de vie du verrou.

En variante non représentée au verrou 12 décrit ci-dessus, le ressort de torsion 40 est remplacé par un ressort comprenant une portion hélicoïdale et deux bras à une seule branche. Alternativement, le ressort 40 est remplacé par un ressort à lame.

Le fait de matérialiser la surface de déplacement du verrou 12 par un rouleau 42 est avantageux pour diminuer les forces de frottement et allonger la durée de vie du ressort. Cependant, la surface de déplacement peut ne pas comporter de rouleau. En variante non représentée, la ou les extrémités 92 du bras 86 peuvent ainsi être nues, ou bien recouvertes d'un manchon lubrifiant, par exemple en polytétrafluroéthylène, pour faciliter la liaison glissante entre l'extrémité 92 du ressort et le profil incurvé 58 de la gâche. Dans une autre variante, chaque bras du ressort comprend une surface de déplacement à ou proche de l'extrémité dudit bras, chaque surface de déplacement étant identique ou différente de l'autre.

Les différents éléments du verrou 12 sont préférentiellement en métal, comme l'aluminium ou l'acier inoxydable pour augmenter leur solidité et/ou leur durée de vie. En variante, certains éléments, comme la console, la gâche ou le poussoir, moins sollicités mécaniquement, peuvent être fabriqués en matière plastique ou composite. Le poids du verrou est ainsi diminué et, selon le composant, la fabrication est plus facile et/ou plus rapide.

## Revendications

1. Verrou (12) destiné à assembler de manière amovible un panneau (18) à une structure (14), ledit verrou comprenant :
- une console (30) apte à être fixée au panneau ;
- une gâche (32, 132), articulée à la console en rotation autour d'un premier axe (52) ;
- un poussoir (34) articulé à la console en rotation autour d'un deuxième axe (74) parallèle au premier axe ;
- un ressort (40), comprenant un premier (86) et un deuxième (88) bras reliés par au moins une portion intermédiaire (90), une extrémité de chacun desdits premier et deuxième bras étant en appui respectivement sur la gâche et sur le poussoir ;
le verrou étant mobile entre une configuration fermée, dans laquelle la gâche est au contact du poussoir, et une configuration ouverte, dans laquelle la gâche est à distance du poussoir ; une première contrainte du ressort dans la position fermée étant supérieure à une deuxième contrainte dudit ressort dans la position ouverte ;
l'au moins une portion intermédiaire (90) du ressort étant disposée autour du deuxième axe (74) ; le verrou étant **caractérisé en ce que**:
- le verrou comprend en outre une surface (42) de déplacement, reliée à ou proche de l'extrémité d'au moins le premier bras (86) ; et
- la gâche comporte un profil de déplacement (58, 158) en contact avec la surface de déplacement (42) dans les configurations fermée et ouverte du verrou, ladite surface de déplacement étant apte à se déplacer sur ledit profil de déplacement lors d'un déplacement dudit verrou entre lesdites configurations fermée et ouverte.

2. Verrou selon la revendication 1, dans lequel la surface de déplacement comporte un rouleau (42) articulé à l'extrémité du premier bras (86), selon un troisième axe (98) parallèle au deuxième axe.

3. Verrou selon la revendication 1 ou 2, dans lequel le profil de déplacement (58, 158) comporte une première (60) et une seconde (62) extrémités, ladite seconde extrémité étant au contact de la surface de déplacement (42) dans la configuration ouverte, une distance entre le premier axe (52) et la seconde extrémité étant inférieure à une distance entre le premier axe et la première extrémité.

4. Verrou selon la revendication 3, dans lequel le profil de déplacement (58, 158) comporte en outre une zone intermédiaire (64) proche de la première extrémité (60), une distance entre le premier axe (52) et la seconde extrémité étant inférieure à une distance entre le premier axe et la zone intermédiaire.

5. Verrou selon l'une des revendications précédentes, dans lequel une distance entre les deuxième (74) et troisième (98) axes est inférieure à une distance entre les premier (52) et deuxième axes.

6. Verrou selon l'une des revendications précédentes, dans lequel les premier et deuxième bras du ressort forment un premier angle (α) en configuration fermée et un deuxième angle (β) en configuration ouverte, une différence entre les premier et deuxième angles étant inférieure à 60°, préférentiellement inférieure à 30° et plus préférentiellement inférieure à 20°.

7. Verrou selon la revendication 2, dans lequel le premier bras (86) du ressort comporte deux branches (92) sensiblement parallèles, le rouleau (42) étant disposé entre lesdites deux branches.

8. Verrou selon l'une des revendications précédentes, dans lequel la gâche (32, 132) comprend deux parois (56, 156) traversées par le premier axe (52).

9. Verrou selon la revendication 8, dans lequel le profil de déplacement (158) de la gâche (132) est formé par une pièce disposée entre les deux parois (156) et fixée auxdites deux parois.

10. Verrou selon l'une des revendications précédentes, dans lequel le ressort (40) est un ressort de torsion, et la portion intermédiaire (90) est une portion hélicoïdale.

11. Aéronef (10) comprenant : une structure (14), un panneau (18) mobile par rapport à ladite structure ; et un verrou (12) selon l'une des revendications précédentes, ledit verrou étant fixé au panneau de sorte qu'en configuration fermée du verrou, ledit verrou bloque une ouverture du panneau par rapport à la structure.

## Patentansprüche

1. Verriegelung (12) zum lösbaren Verbinden einer Platte (18) mit einer Struktur (14), die Verriegelung umfassend:
- eine Konsole (30), die geeignet ist, um an der Platte befestigt zu werden;
- ein Schließblech (32, 132), das um eine erste Achse (52) drehbar an der Konsole angelenkt ist;
- einen Drücker (34), der um eine zweite Achse (74), die parallel zu der ersten Achse ist, drehbar an der Konsole angelenkt ist;
- eine Feder (40), umfassend einen ersten (86) und einen zweiten (88) Arm, die durch mindestens einen Zwischenabschnitt (90) verbunden sind, wobei ein Ende des ersten und des zweiten Arms jeweils auf dem Schließblech bzw. dem Drücker aufliegt;
wobei die Verriegelung Riegel zwischen einer geschlossenen Konfiguration, in der das Schließblech den Drücker berührt, und einer offenen Konfiguration, in der das Schließblech von dem Drücker beabstandet ist, beweglich ist; wobei eine erste Spannung der Feder in der geschlossenen Position größer ist als eine zweite Spannung der Feder in der offenen Position;
wobei der mindestens eine Zwischenabschnitt (90) der Feder um die zweite Achse (74) angeordnet ist; wobei die Verriegelung **dadurch gekennzeichnet ist, dass**:
- die Verriegelung ferner eine Bewegungsfläche (42) umfasst, die mit dem Ende von mindestens dem ersten Arm (86) verbunden ist oder in dessen Nähe ist; und
- das Schließblech ein Verschiebungsprofil (58, 158) umfasst, das die Verschiebungsfläche (42) in der geschlossenen und der offenen Konfiguration des Riegels berührt, wobei die Verschiebungsfläche geeignet ist, um sich bei einer Verschiebung der Verriegelung zwischen der geschlossenen und der offenen Konfiguration auf dem Verschiebungsprofil zu bewegen.

2. Verriegelung nach Anspruch 1, wobei die Bewegungsfläche eine Rolle (42) umfasst, die an dem Ende des ersten Arms (86) entlang einer dritten Achse (98) parallel zu der zweiten Achse angelenkt ist.

3. Verriegelung nach Anspruch 1 oder 2, wobei das Bewegungsprofil (58, 158) ein erstes (60) und ein zweites (62) Ende umfasst, wobei das zweite Ende in der offenen Konfiguration die Bewegungsfläche (42) berührt, wobei ein Abstand zwischen der ersten Achse (52) und dem zweiten Ende kleiner ist als ein Abstand zwischen der ersten Achse und dem ersten Ende.

4. Verriegelung nach Anspruch 3, wobei das Bewegungsprofil (58, 158) ferner einen Zwischenbereich (64) nahe dem ersten Ende (60) umfasst, wobei ein Abstand zwischen der ersten Achse (52) und dem zweiten Ende kleiner ist als ein Abstand zwischen der ersten Achse und dem Zwischenbereich.

5. Verriegelung nach einem der vorherigen Ansprüche, wobei ein Abstand zwischen der zweiten (74) und der dritten (98) Achse kleiner ist als ein Abstand zwischen der ersten (52) und der zweiten Achse.

6. Verriegelung nach einem der vorherigen Ansprüche, wobei der erste und der zweite Arm der Feder in der geschlossenen Konfiguration einen ersten Winkel (α) und in der offenen Konfiguration einen zweiten Winkel (ß) bilden, wobei eine Differenz zwischen dem ersten und dem zweiten Winkel weniger als 60°, vorzugsweise weniger als 30° und noch bevorzugter weniger als 20° ist.

7. Verriegelung nach Anspruch 2, wobei der erste Arm (86) der Feder zwei im Wesentlichen parallele Schenkel (92) umfasst, wobei die Rolle (42) zwischen den zwei Armen angeordnet ist.

8. Verriegelung nach einem der vorherigen Ansprüche, wobei das Schließblech (32, 132) zwei Wände (56, 156) umfasst, durch die der erste Stift (52) verläuft.

9. Verriegelung nach Anspruch 8, wobei das Bewegungsprofil (158) des Schließstücks (132) durch ein Teil gebildet wird, das zwischen den zwei Wänden (156) angeordnet und an diesen zwei Wänden befestigt ist.

10. Verriegelung nach einem der vorherigen Ansprüche, wobei die Feder (40) eine Torsionsfeder ist und der Zwischenabschnitt (90) ein schraubenförmiger Abschnitt ist.

11. Luftfahrzeug (10), umfassend: eine Struktur (14), eine Platte (18), die in Bezug auf die Struktur beweglich ist; und eine Verriegelung (12) nach einem der vorherigen Ansprüche, wobei die Verriegelung an der Platte befestigt ist, sodass in der geschlossenen Konfiguration der Verriegelung die Verriegelung eine Öffnung der Platte in Bezug auf die Struktur blockiert.

## Claims

1. A lock (12) for releasably connecting a panel (18) to a structure (14), said lock comprising:
- a bracket (30) suitable for attachment to the panel;
- a striker (32, 132), hinged to the bracket in rotation about a first axis (52);
- a plunger (34) articulated to the bracket in rotation about a second axis (74) parallel to the first axis;
- a spring (40), comprising a first (86) and a second (88) arm connected by at least one intermediate portion (90), one end of each of said first and second arms bearing on the striker and on the plunger respectively;
the lock being movable between a closed configuration, in which the striker is in contact with the plunger, and an open configuration, in which the striker is spaced away from the plunger; a first stress of the spring in the closed position being greater than a second stress of said spring in the open position;
the at least one intermediate portion (90) of the spring being disposed about the second axis (74); the lock being **characterised in that**:
- the lock further comprises a travel surface (42) connected to or near the end of at least the first arm (86); and
- the striker has a movement profile (58, 158) in contact with the travel surface (42) in the closed and open configurations of the lock, said travel surface being adapted to move over said movement profile upon movement of said lock between said closed and open configurations.

2. The lock according to claim 1, wherein the travel surface comprises a roller (42) hinged to the end of the first arm (86), along a third axis (98) parallel to the second axis.

3. The lock according to claim 1 or 2, wherein the movement profile (58, 158) has first (60) and second (62) ends, said second end contacting the travel surface (42) in the open configuration, a distance between the first axis (52) and the second end being less than a distance between the first axis and the first end.

4. The lock according to claim 3, wherein the movement profile (58, 158) further comprises an intermediate region (64) proximate the first end (60), a distance between the first axis (52) and the second end being less than a distance between the first axis and the intermediate region.

5. The lock according to any of the preceding claims, wherein a distance between the second (74) and third (98) axes is less than a distance between the first (52) and second axes.

6. The lock according to any of the preceding claims, wherein the first and second spring arms form a first angle (α) in the closed configuration and a second angle (β) in the open configuration, a difference between the first and second angles being less than 60°, preferably less than 30° and more preferably less than 20°.

7. The lock according to claim 2, wherein the first arm (86) of the spring has two substantially parallel legs (92), the roller (42) being disposed between said two legs.

8. The lock according to any of the preceding claims, wherein the striker (32, 132) comprises two walls (56, 156) through which the first pin (52) passes.

9. The lock according to claim 8, wherein the movement profile (158) of the striker (132) is formed by a part disposed between the two walls (156) and attached to said two walls.

10. The lock according to any of the preceding claims, wherein the spring (40) is a torsion spring, and the intermediate portion (90) is a helical portion.

11. An aircraft (10) comprising: a structure (14), a panel (18) movable relative to said structure; and a lock (12) according to any of the preceding claims, said lock being attached to the panel such that in a closed configuration of the lock, said lock prevents an opening of the panel relative to the structure.
